# EUROPÄISCHE PATENTANMELDUNG

(11) **EP 0 690 081 A1**
(43) Veröffentlichungstag der Anmeldung: **03.01.1996**
(21) Anmeldenummer: 95109495.2
(22) Anmeldetag: 20.06.1995
(51) Int. Cl.: C08F 265/06, C14C 11/00, C09D 151/00

(54) **Pfropfpolymerisate zur Beschichtung von Flächengebilden**

(30) Priorität: 28.06.1994 DE 4422484
(71) Anmelder: Röhm GmbH, D-64293 Darmstadt (DE)
(72) Erfinder: Bauer, Harald, Dr., D-64380 Rossdorf (DE); Christner, Jürgen, Dr., D-64342 Seeheim-Jugenheim (DE); Weber, Maria Luise, D-63322 Rödermark (DE)

(57) **Zusammenfassung**

Die Erfindung betrifft Pfropfpolymerisate auf Basis von Poly(meth)-acrylsäureestern zur Beschichtung von Flächengebilden, wobei die Pfropfpolymerisate aufgebaut sind aus einem Basispolymerisat, das zu 60 - 100 Gew.-% gebildet wird aus Monomeren der Formel I 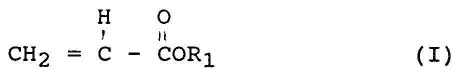
worin
- R₁: für einen Alkylrest mit 2 bis 24 Kohlenstoffatomen steht, auf das
Pfropfmonomeren MPF ausgewählt aus der Gruppe bestehend aus
a) Methylmethacrylat
b) Monomeren der Formel II 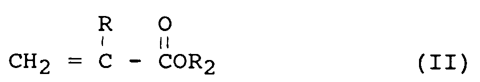 worin
   - R: für Wasserstoff oder Methyl und R₂ für einen Alkylrest mit 1 oder mit 8 bis 14 Kohlenstoffatomen steht, mit der Maßgabe, daß R und R₂ nicht gleichzeitig für Methyl stehen, und
c) Monomeren der Formel III 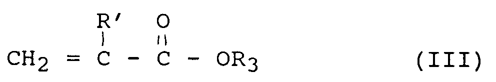 worin
   - R': für Wasserstoff oder Methyl und R₃ für einen mindestens einfach bis perfluorierten Alkylrest mit 1 bis 6 Kohlenstoffatomen steht,
   pfropfend aufpolymerisiert sind, mit der Maßgabe, daß der Methylmethacrylatanteil an den Pfropfmonomeren MPF größer 80 Gew.-% sein soll, sofern der Anteil der Monomeren der Formel III Null ist.

## Beschreibung

### Gebiet der Erfindung

Die Erfindung betrifft Pfropfpolymerisate auf Basis von Poly(meth)acrylsäureestern zur Beschichtung von Flächengebilden, insbesondere von Leder im Zuge einer Imprägnierung, Grundierung und/oder Schlußlackierung.

### Stand der Technik

Polymerdispersionen auf Acrylatbasis besitzen beträchtliche wirtschaftliche Bedeutung gerade auch bei der Beschichtung von Leder. Sie werden sowohl zur Imprägnierung und Grundierung und in letzter Zeit auch vermehrt zur Schlußlackierung von Ledern eingesetzt [vgl. CH. Cluthe et al. J.A.L.C.A. 73, 22 - 29 (1978), DE-A 33 44 254, US-A 4 491 645]. Ungeachtet des relativ hohen Anteils von Acrylatdispersionen in der Lederzurichtung neben Polyurethandispersionen, Nitrocellulose und Cellulose-Acetobutyrat-Emulsionen ist ihr Einsatz in verschiedenen Anwendungsrichtungen sehr beschränkt. Für hohe Ansprüche, wie sie z.B. an wäßrige Top-Coat-Systeme gestellt werden müssen, sind die mechanischen Eigenschaften der Acrylatdispersionen wie Reißfestigkeit und Zugfestigkeit zu gering, verglichen etwa mit Polyurethandispersionen. Dies drückt sich in der Praxis in ungenügender Knickfestigkeit (im Bally-Flexometertest) oder in nicht ausreichender Reibechtheit aus. Ähnliches gilt für die Wasser- und Lösemittelbeständigkeit, die bei Polyurethandispersionen ebenfalls deutlich stärker ausgeprägt ist. Da der Schlußlack als letzter Auftrag neben der physikalischen Echtheit auch ganz wesentlich das Aussehen und den Griff des fertigen Leders bestimmt, müssen die eingesetzten Dispersionen auch einen angenehmen Griff besitzen, um die Menge an zuzusetzenden Griffmitteln zu reduzieren und damit auch die Echtheit des Leders zu verbessern. Die Verwendung von Griffmitteln in wäßrigen Schlußlacken hat den Nachteil, daß sie nur für eine begrenzte Zeit den angenehmen Griff liefern. Die herkömmlichen Acrylatdispersionen haben in dieser Hinsicht den Nachteil, daß sie zu plastisch wirken und keinen angenehmen Griff ergeben. Andererseits ist die Polyacrylatanwendung beispielsweise unter Umweltgesichtspunkten besonders attraktiv.
Aus der EP-A 563 819 sind Polymerprodukte zur Behandlung von Ledern in Form von Pfropfprodukten auf (Meth)acrylatbasis bekannt, wobei das Basispolymerisat zu 55 - 100 Gew.-% aus Acrylsäureestern, die Pfropfmonomeren aus Methacrylsäureestern von C₂-C₂₄-Alkanolen bestehen. Die (unveröffentlichte) deutsche Patentanmeldung P 43 13 714.8 betrifft ebenfalls Pfropfpolymerisate in Emulsionsform, wobei das Basispolymerisat zu 55 - 100 Gew.-% aus Acrylsäureestern von C₂-C₂₄-Alkanolen, die Pfropfmonomeren aus Acrylestern von C₂-C₂₄-Alkanolen bestehen.

### Aufgabe und Lösung

Aus den vorstehenden Ausführungen wird ersichtlich, daß Bedarf bestand an einem verbesserten Polymerprodukt auf Acrylatbasis, das zum einen eine hohe mechanische Festigkeit bei ausreichender Elastizität aufweist und zum anderen nur eine geringe Thermoplastizität aufweist. Desweiteren wird bei einer Appretur als letztem Auftrag neben den guten physikalischen Echtheiten auch ein ausgezeichneter Griff verlangt. Es wurde nun gefunden, daß die Forderungen der Technik durch die erfindungsgemäßen Acrylatdispersionen weitgehend erfüllt werden können. Die aufgezeigten Nachteile der bisher in Frage kommenden Acrylatdispersionen bei Verwendung als wäßrige Schlußlacksysteme werden durch diese neu zur Verfügung gestellten Pfropfpolymerisate beseitigt.

Die Erfindung betrifft Pfropfpolymerisate, insbesondere Emulsionspolymerisate auf Basis von Poly(meth)acrylsäureestern, aufgebaut aus einem Basispolymer BP, das zu 60 - 100 Gew.-%, vorzugsweise zu 85 - 100 Gew.-% gebildet wird aus Monomeren der Formel I 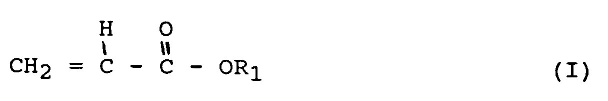
worin
- R₁: für einen Kohlenwasserstoffrest, insbesondere einen Alkylrest mit 2 - 24 Kohlenstoffatomen, vorzugsweise 2 - 8 Kohlenstoffatomen steht
auf das Pfropfmonomeren MPF, ausgewählt aus der Gruppe bestehend aus
a) Methylmethacrylat
b) Monomeren der Formel (II) 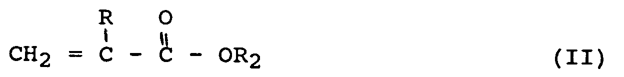 worin
   - R: für Wasserstoff oder Methyl und R₂ für einen Alkylrest mit 1 oder 8 - 24, vorzugsweise 8 - 18, insbesondere 16 - 18 Kohlenstoffatomen steht mit der Maßgabe, daß R und R₂ nicht gleichzeitig für Methyl stehen sollen, und
c) Monomeren der Formel III 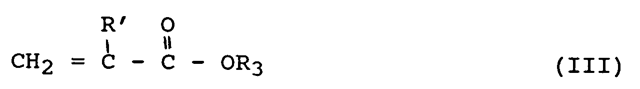 worin
   - R': für Wasserstoff oder Methyl und R₃ für einen mindestens einfach bis perfluorierten Alkylrest mit 1 bis 6 Kohlenstoffatomen steht,
   pfropfend aufpolymerisiert sind, mit der Maßgabe, daß der Methylmethacrylatanteil an den Pfropfmonomeren MPF größer 80 Gew.-% sein soll, sofern der Anteil der Monomeren der Formel III an den Pfropfmonomeren Null ist.

Besonders bevorzugt sind die Monomeren der Formel I, in denen R₁ für Ethyl, Butyl und 2-Ethylhexyl steht.
Der Anteil des Methylmethacrylats gemäß a) an den Pfropfmonomeren MPE liegt bei > 80 bis 100 Gew.-%, insbesondere bei 85 bis 100 Gew.-%, sofern keine Comonomeren der Formel III anwesend sind. Der Anteil der Monomeren der Formel II an den Pfropfmonomeren MPF liegt bei 0 bis < 20 Gew.-%, vorzugsweise bei 2 bis < 20 Gew.-%, insbesondere bei 5 - 15 Gew.-%, sofern keine Comonomeren der Formel III vorhanden sind. Werden jedoch Pfropfmonomere der Formel III eingesetzt, so beträgt die Summe der Monomeren (II) plus (III) mindestens 80 und bis 98 Gew.-%, vorzugsweise bis 95 Gew.-% bezogen auf die Gesamtheit der Pfropfmonomeren MPF. In diesem Falle kann der Methylmethacrylatanteil selbst null sein.
Bevorzugt sind Monomere der Formel II in denen R₂ für C₁₆-C₁₈-Alkyl steht.
Der Anteil der Monomeren der Formel III an den Pfropfmonomeren MPF liegt bei 0 bis < 20 Gew.-%, insbesondere bei 0,5 bis 15 Gew.-%, speziell bei 2 - 10 Gew.-%.
Die Monomeren der Formel III, die definitionsgemäß mindestens einfach fluorierte Alkylreste darstellen, sind vorzugsweise mehrfach fluoriert bis perfluoriert. Genannt seien z.B. das 2,2,3,3-Tetrafluorpropylmethacrylat, das 2,2,2-Trifluorethylmethacrylat, das 1,1,1,3,3,3-Hexafluor-2-propylmethacrylat.
Der Anteil an funktionellen Comonomeren wie z.B. N-Methylol(meth)acrylamid, (Meth)acrylamid, (Meth)acrylsäure, Maleinsäure, Itaconsäure (vgl. H. Rauch-Puntigam, Th. Völker, Acryl- und Methacrylverbindungen, Springer-Verlag 1967) an den Pfropfmonomeren MPF sollte bei < 5 Gew.-% bis 0 Gew.-% liegen.
Die Monomeranteile an den Pfropfmonomeren MPF ergänzen sich zu 100 Gew.-%. Die Gewichtsanteile des Basispolymerisats und des Pfropfpolymerisats PF verhalten sich wie 10 zu 90 bis 90 zu 10, insbesondere wie 60 zu 40.
Für das Gebiet wäßriger Schlußlacke haben sich insbesondere Produkte als geeignet erwiesen, bei denen R₁ einen Alkylrest mit 2 - 4 Kunststoffatomen darstellt.

Als weitere Monomere, die im Basispolymerisat zu ≦ 45 Gew.-%, bevorzugt < 15 Gew.-% und bis zu 0,1 Gew.-% copolymerisiert werden können, seien solche genannt, die den Charakter als Acrylatpolymer nicht grundsätzlich verändern, insbesondere Methacrylsäureester von C₁-C₂₄-Alkanolen oder Methylacrylat. Ferner können aromatische Monomere wie Styrol und seine alkylsubstituierten, insbesondere methylsubstituierten Derivate, ferner Phenyl- und Benzyl(meth)acrylat, copolymerisiert werden, gewöhnlich in Anteilen von 0 - 30 Gew.-%, insbesondere 0,5 - 25 Gew.-%, bevorzugt ≦ 15 Gew.-%. Anteile von hydrophilen Monomeren wie Hydroxyalkylacrylate, Alkoxyalkylacrylate oder (Meth)acrylsäure können in Anteilen von 0 bis 7 Gew.-%, vorzugsweise 0,1 bis 5 Gew.-%, insbesondere 0,1 bis 0,5 Gew-% copolymerisiert werden, wobei "Alkyl" wiederum für C₂-C₂₄ steht (vgl. Ullmanns Encyclopädie der Techn. Chemie, 3. Auflage, Bd. 14, S. 108 - 109, Urban & Schwarzenberg 1963).

Das Molgewicht M_{w} des Basispolymerisats BP liegt gewöhnlich im Bereich 100.000 bis < 1 000 000 Dalton. In Abhängigkeit von den Pfropfbedingungen erhöht sich das Molgewicht auf J = 200 bis 1 000 ml/g (nach ISO 1628-6). Die Bestimmung der Molgewichte erfolgt gemäß H.F. Mark et al, Enyclopedia of Polymer Science and Technology, 2nd Ed. Vol. 10, 1 - 19, J. Wiley 1987.

### Herstellung der Polymerisate PF

Im Prinzip eignen sich die einschlägig verwendeten Polymerisationsverfahren des Standes der Technik (vgl. H. Rauch-Puntigam, Th. Völker, Acryl- und Methacrylverbindungen, Springer Verlag 1967; H.F. Mark et al. Encyclopedia loc.cit.) zur Herstellung der Polymeren, wobei bei der Herstellung der Basispolymerisate BP vorteilhaft Bedingungen angewendet werden, welche die Vernetzung nicht begünstigen. In der Regel bedient man sich der radikalischen Polymerisation unter Verwendung der üblichen Radikalinitiatoren.
Bevorzugt ist ein zweistufiges Emulsionspolymerisationsverfahren, wobei die erste Stufe, die Herstellung der Basispolymerisate BP vorteilhaft als Batchpolymerisation durchgeführt wird. Zweckmäßig schließt sich unmittelbar daran die Pfropfung - vorzugsweise in Form einer Zulaufpolymerisation - der Pfropfmonomeren MPF an. Vorteilhaft wird dieser Schritt bei Temperaturen im Bereich 70 - 100 Grad C durchgeführt. Zur Erreichung gut handhabbarer Basispolymerisate wird deren Molgewicht M_{w} -gegebenenfalls unter Zugabe von Reglern - auf < 1 000 000 Dalton begrenzt. Als Initiatoren kommen die dafür üblichen, insbesondere Persulfate wie z.B. Kalium- oder Ammoniumperoxidisulfat in Mengen von gewöhnlich 0,001 bis 0,5 Gew.-% bezogen auf die Monomeren infrage, gegebenenfalls auch ein Redoxsystem (vgl. Rauch-Puntigam, loc.cit., S. 221 - 229). Während die Anwendung gut pfropfbarer Monomeren im Basispolymerisat BP Vorteile bringt, hat es sich als ungünstig erwiesen, die Pfropfung durch einen hohen Initiatorzusatz zu forcieren. Diese Maßnahme führt zu thermolabilen Polymeren.
Als Emulgatoren dienen ebenfalls die an sich bekannten, insbesondere anionogene wie die Alkalisalze von Paraffinsulfonaten, normalerweise in Mengen von 0,5 - 5 Gew.-% (bezogen auf die Wassermenge).

Zweckmäßig schließt sich unmittelbar daran die Pfropfung vorzugsweise in Form einer Zulaufpolymerisation der Pfropfmonomeren MPF an. Vorteilhaft wird dieser Schritt bei Temperaturen um 70 bis 100 Grad C durchgeführt.
Dabei kann im einzelnen wie folgt verfahren werden: Zunächst stellt man α) unter Zugabe der Emulgatoren und der Initiatoren eine wäßrige Emulsion der Monomeren her, wobei als Anhalt ein Mengenverhältnis Monomer zu Wasser wie ca. 1 : 2 gelten kann.
Vorteilhaft kann dabei so vorgegangen werden, daß zunächst nur der peroxidische Partner eines Redox-Initiatorsystems zugesetzt wird. Anschließend erwärmt man zweckmäßig unter einem inerten Schutzgas wie beispielsweise Stickstoff/Argon auf eine geeignete Temperatur, beispielsweise 35 ± 10 Grad C und unter Zugabe des reduzierenden Partners des Redoxsystems. Gewöhnlich steigt die Temperatur binnen kurzer Zeit, als Anhalt seien ca. 10 Minuten genannt, stark an, beispielsweise auf ca. 85 ± 5 Grad C. Daraufhin werden β) die Pfropfmonomeren MPF vorzugsweise durch Eintropfen zugegeben, in der Regel innerhalb ca. 15 - 90 Minuten. Anschließend wird unter Erwärmen, beispielsweise indem man die Temperatur bei ca. 80 Grad C hält, die Endpolymerisation durchgeführt.
Man erhält gewöhnlich das Pfropfpolymerisat PF in Form einer stabilen Dispersion, mit einem Polymergehalt üblicherweise im Bereich von 20 bis 70 Gew.-% bezogen auf die gesamte Dispersion, die direkt oder nach Zugabe von z.B. Ammoniak zu einem zähen, elastischen Film aufgetrocknet werden kann. Der Restmonomerengehalt liegt gewöhnlich im ppm-Bereich.

Durch Variation der Monomeren im Basispolymer BP und der Pfropfmonomeren MPF läßt sich die Härte bzw. die Konsistenz der Filme in vielfältiger Weise beeiflussen und steuern. (Zum Einfluß der Monomeren auf die "Härte" der Polymeren vgl. Vieweg-Esser, Kunststoff-Handbuch Bd. IX, S. 333 - 340, Carl Hanser 1975; H.F. Mark, et.al. Encyclopedia of Science & Engineering, 2nd Ed. Vol. 7, pg. 533 - 544, J. Wiley 1987; Kirk Othmer, Encyclopedia of Chemical Technology, 3rd. Ed., Vol. 1, pg. 387 - 389, J. Wiley, 1978).

Für den Grundierungsschritt bei den Ledern werden **"weiche"** Pfropfpolymerisate der Filmhärte Shore A20 bis A50 bevorzugt angewendet. (Zur Bestimmung der Shore-Härte vgl. DIN 53 505 bzw. ASTM D 676).
Die Filmhärte läßt sich in erster Näherung einmal durch Auswahl der Pfropfmonomeren zum anderen durch Mischen von "weichen" und "harten" Pfropfpolymerisaten einstellen.

Als Beispiele für "weiche" Pfropfpolymerisate seien solche mit Butylmethacrylat und/oder Ethylhexylmethacrylat als Pfropfkomponente genannt, die ggfls. mit "härteren" Monomeren wie Ethylmethacrylat, Methylmethacrylat u.ä. cogepfropft sein können. Als "härtere" Pfropfpolymerisate seien solche mit Ethylmethacrylat, Methylmethacrylat, Benzylmethacrylat ggfls. im Gemisch als Pfropfmonomere gewonnen, genannt.

### Durchführung

Die Applikationsverfahren und -modalitäten der erfindungsgemäßen Pfropfpolymerisate PF schließen sich eng an diejenigen des Standes der Technik an. (Vgl. H. Herfeld Ed. Bibliothek des Leders Bd. 6, R. Schubert, Lederzurichtung-Oberflächenbehandlung des Leders, Umschau 1982, S. 148 - 219) ebenso wie die anwendbaren Lederdeckfarben und Schönungshilfsmittel und die Zurichthilfsmittel. Insbesondere empfiehlt sich der Auftrag durch Spritzen, durch "airless"-Spritzen, Rollercoating u.ä.
Die Grundierungs- und Appreturaufträge können z.B. zur Verbesserung der physikalischen Eigenschaften, wie z.B. Knickfestigkeit, Wasser- und Lösungsmittelbständigkeit, Reißdehnung etc., bzw. der Prägbarkeit mit bestimmten Polyurethandispersionen zusätzlich sowie mit Vernetzersystemen auf Epoxid-, Polycarbodiimid-, Polyisocyanat- oder Polyaziridinbasis gemischt werden. Diese Vernetzersysteme stehen im allgemeinen zu den Polymerprodukten PF im Gewichtsverhältnis 100 zu 10 bis 100 zu 0,1. Die Praxis hat gezeigt, daß der Anteil an nicht-gepfropften Polymerisatdispersionen nicht zu hoch sein darf, um die Ausbildung der Hart-Weich-Segment-Struktur nicht allzusehr zu stören.
So sollte in der Regel der Anteil an nicht-gepfropfter Polymerisat-Dispersion 90 % nicht überschreiten.

Zum Erreichen einer Mindestschichtdicke sowie einer ausreichenden Deckwirkung ist die Verwendung von an sich bekannten Verdickungsmitteln angezeigt. Als Verdicker kommen beispielsweise solche aus der Gruppe gebildet aus Polyglykolpolyurethan, Polyvinylpyrrolidon oder Acrylat(co)polymerisaten in Frage. Im allgemeinen stehen die Verdicker zu den Pfropfpolymerisaten PF im Gewichtsverhältnis 100 zu 10 bis 100 zu 0,01. Durch Einstellung und Anpassung der Viskosität läßt sich das Eindringvermögen bzw. der Grad der Deckung gut regulieren. Wie bereits ausgeführt, läßt sich die Filmhärte und die Filmkonsistenz durch geeignete Variation der Monomeren im Pfropf- und im Basispolymerisat sowie durch Gestaltung des Verhältnisses von Basis zu Pfropfpolymerisat weitgehend in der gewünschten Richtung steuern. Als ein weiterer Vorteil im Zusammenhang mit der Anwendung, insbesondere in der Zurichtung von Ledern sei vermerkt, daß sich alle üblichen Hilfsmittel, speziell im Handel befindliche, zur Regulierung von Griff, Farbe, Verlauf und Viskosität einsetzen lassen. Dies sind im allgemeinen Lösungen (z.B. Verlaufsmittel, Produkte auf Basis Glykolether, Ether, wie z.B. Butylglykol, Methoxypropanol, Tributoxyethylphosphat etc.) bzw. Emulsionen/Dispersionen mit Kasein, Wachsen, Silikonen in den üblichen Anwendungsmengen bzw. Anwendungskonzentrationen (vgl. F. Stather, Gerbereichemie und Gerbereitechnologie, Akademie Verlag Berlin, 1967, S. 507 - 632; R. Schubert, Lederzurichtung-Oberflächenbehandlung des Leders loc.cit.)

Insbesondere können die an sich bekannten Lederfarben sehr wirksam eingesetzt werden (vgl. F. Stather loc.cit, S. 615 - 632) beispielsweise in Form von Pigmentpasten, weiter können im Bedarfsfall einschlägig verwendete Mattierungsmittel, beispielsweise auf Silikat-Basis eingesetzt werden.

Als besonders herausragende Eigenschaften der erfindungsgemäßen Pfropfpolymeren PF sind deren relativ geringe Thermoplastizität und deren gute Zug-Dehnungseigenschaften zu nennen. Bei der Beschichtung von Leder schlägt sich dieser Befund in einer ausgezeichneten Prägbarkeit, geringer Klebneigung bzw. guter Blockfestigkeit sowie in einer hohen Flexibilität nieder.

Eine grundlegende Voraussetzung für das Erreichen dieser Eigenschaften ist die Temperung des beschichteten Materials bei bestimmten Minimaltemperaturen. Über die Zusammensetzung der Polymeren kann die Minimaltemperatur in den für die Lederzurichtung günstigen Bereich von 60 - 120 Grad C gelegt werden. Auch die Temperzeit spielt zum Erreichen der optimalen Eigenschaften eine Rolle.
Die günstige Beeinflussung der genannten Eigenschaften erreicht man vor allem während den bei der Zurichtung üblichen Behandlungszeiten, die auf die Schritte der Trocknung, des Bügelns und der Prägung entfallen.
Im Falle der Trocknung sind im Durchschnitt z.B. 2 bis 5 Minuten bei Temperaturen im Bereich 60 - 90 Grad C anzusetzen. Die statischen und dynamischen Vorgänge des Bügelns und des Prägens erfolgen bei Temperaturen zwischen 70 und 170 Grad C, in der Regel während einigen Sekunden, als Anhalt seien 2 - 6 sec. genannt und unter Drücken von 50 - 300 bar.
Allgemein kann gesagt werden, daß sich die physikalischen Qualitäten der Beschichtung durch Ausdehnen der Temperzeit zusätzlich steigern lassen.
Bei der praktischen Durchführung wird vorteilhaft so vorgegangen, daß die bei der Herstellung erhaltenen wäßrigen Polymer-Dispersionen zur Anwendung kommen können.

### Allgemeine Verfahrensweise

Das Pfropfpolymerisat PF, vorzugsweise in Dispersionsform wird vorgelegt. Dazu gibt man unter Rühren das Wasser und anschließend die Zusatzstoffe, wie Mattierungsmittel, die Casein-Fettemulsion, sodann die wäßrige Paraffin-Emulsion, weiter die Pigmentpaste und das Koaleszenzmittel, die Silikonemulsion und zuletzt gegebenenfalls das Verdickungsmittel.
Nach dieser Verfahrensweise wurden zwei Formulierungen A-1 und A-2 (Zusammensetzung siehe Tabelle 1) hergestellt.

### BEISPIELE

### A-1: Zurichtung von geschliffenem Möbelleder

### Applikation:

Die Formulierung A-1 wird zweimal gut deckend mit einer handelsüblichen Luftdruck-Spritzpistole (ca. 4 bar Druck, Düsenweite 1,2 bzw. 1,4 mm) eventuell "Airless" gespritzt (75 - 125 g/m²). Anschließend wird bei 60 - 80 Grad C in einem Trockenkanal mit Umluft 1 - 5 min getrocknet. Anschließend wird geprägt bei einer Temperatur von 90 Grad C, beim Druck von 250 bar für eine Dauer von 3 sec. Es wird eine Prägeplatte mit mittleren Porennarben verwendet. Es wird noch einmal mittelstark 25 - 50 g/m²) gespritzt und getrocknet. Anschließend wird der Schlußlack einmal satt gespritzt (40 g/m²), getrocknet und abschließend 8 Stunden gemillt. Diese Ergebnisse sind in Tabelle 2 wiedergegeben.

### A-2: Zurichtung von Spalten

### Applikation:

Die Formulierung A-2 wird einmal mittels "Roller-Coater" im Gegenlauf aufgetragen (100 - 175 g/m²). Es wird gebügelt bei 90 Grad C, 150 bar für 3 sec., daran schließt sich zweimaliges Roller coating mit 75 - 100 g/m² und anschließend mit 25 - 75 g/m² an. Dann wird geprägt bei 90 Grad C, 250 - 300 bar 3 - 5 sec. Dann wird der Schlußlack einmal satt gespritzt (40 g/m²) und getrocknet.

### Herstellung der Pfropfpolymerisate

### Beispiel B-1:

Pfropfpolymer auf Basispolymer von Ethylacrylat/Methacrylsäure gepfropft mit Methylmethacrylat im Gewichtsverhältnis (68 : 2) : 30.

Eine Emulsion aus 272 g Ethylacrylat, 8 g Methacrylsäure, 3 g Natriumsalz des C15-Paraffinsulfonats als Emulgator, 0,62 g Ammoniumperoxidisulfat, 0,8 mg FeSO₄ und 566 g Wasser wird auf 30 Grad C erwärmt und unter Inertgas (Stickstoff oder Argon) mit 0,31 g Na₂S₂O₅ versetzt. Die Temperatur steigt innerhalb von 8 - 10 min auf 95 Grad C. Sofort anschließend werden 120 g Methylmethacrylat innerhalb von 15 min zugetropft. Zur Endpolymerisation wird 60 min bis 90 Grad C gerührt, dann wird abgekühlt. Man erhält eine stabile Dispersion, die unmittelbar oder nach Zugabe von NH₃ zu einem zähen Film aufgetrocknet werden kann. Nach der Trocknung in einem Trockenschrank bei 90 Grad C wird ein transparenter Film erhalten.

### Beispiel B-2

Pfropfpolymer auf Basispolymer aus Ethylacrylat/Methacrylsäure gepfropft mit Methylmethacrylat im Gewichtsverhältnis (58 : 2) : 40.

Eine Emulsion aus 232 g Ethylacrylat, 8 g Methacrylsäure, 3 g Natriumsalz des C15-Paraffinsulfonats als Emulgator, 0,62 g Ammoniumperoxidisulfat, 0,8 mg FeSO₄ und 566 g Wasser wird auf 30 Grad C erwärmt und unter Inertgas (Stickstoff oder Argon) mit 0,31 g Na₂S₂O₅ versetzt. Die Temperatur steigt innerhalb von 8 - 10 min auf 95 Grad C. Sofort anschließend werden 160 g Methylmethacrylat innerhalb von 15 min zugetropft. Zur Endpolymerisation wird 60 min bei 90 Grad C gerührt, dann wird abgekühlt. Man erhält eine stabile Dispersion, die unmittelbar oder nach Zugabe von NH₃ zu einem zähen Film aufgetrocknet werden kann. Nach der Trocknung in einem Trockenschrank bei 90 Grad C wird ein transparenter Film erhalten.

### Beispiel B-3

Pfropfpolymer auf Basispolymer aus Ethylacrylat/Methacrylsäure gepfropft mit Methylmethacrylat/2,2,2-Trifluorethylmethacrylat im Gewichtsverhältnis (68 : 2) : (25 : 5).

Eine Emulsion aus 272 g Ethylacrylat, 8 g Methacrylsäure, 3 g Natriumsalz des C15-Paraffinsulfonats als Emulgator, 0,62 g Ammoniumperoxidisulfat, 0,8 mg FeSO₄ und 566 g Wasser wird auf 30 Grad C erwärmt und unter Inertgas (Stickstoff oder Argon) mit 0,31 g Na₂S₂O₅ versetzt. Die Temperatur steigt innerhalb von 8 - 10 min auf 95 Grad C. Sofort anschließend werden 100 g Methylmethacrylat und 20 g Trifluorethylmethacrylat innerhalb von 15 min zugetropft. Zur Endpolymerisation wird 60 min bis 90 Grad C gerührt, dann wird abgekühlt. Man erhält eine stabile Dispersion, die unmittelbar oder nach Zugabe von NH₃ zu einem zähen Film aufgetrocknet werden kann. Nach der Trocknung in einem Trockenschrank bei 90 Grad C wird ein transparenter Film erhalten.

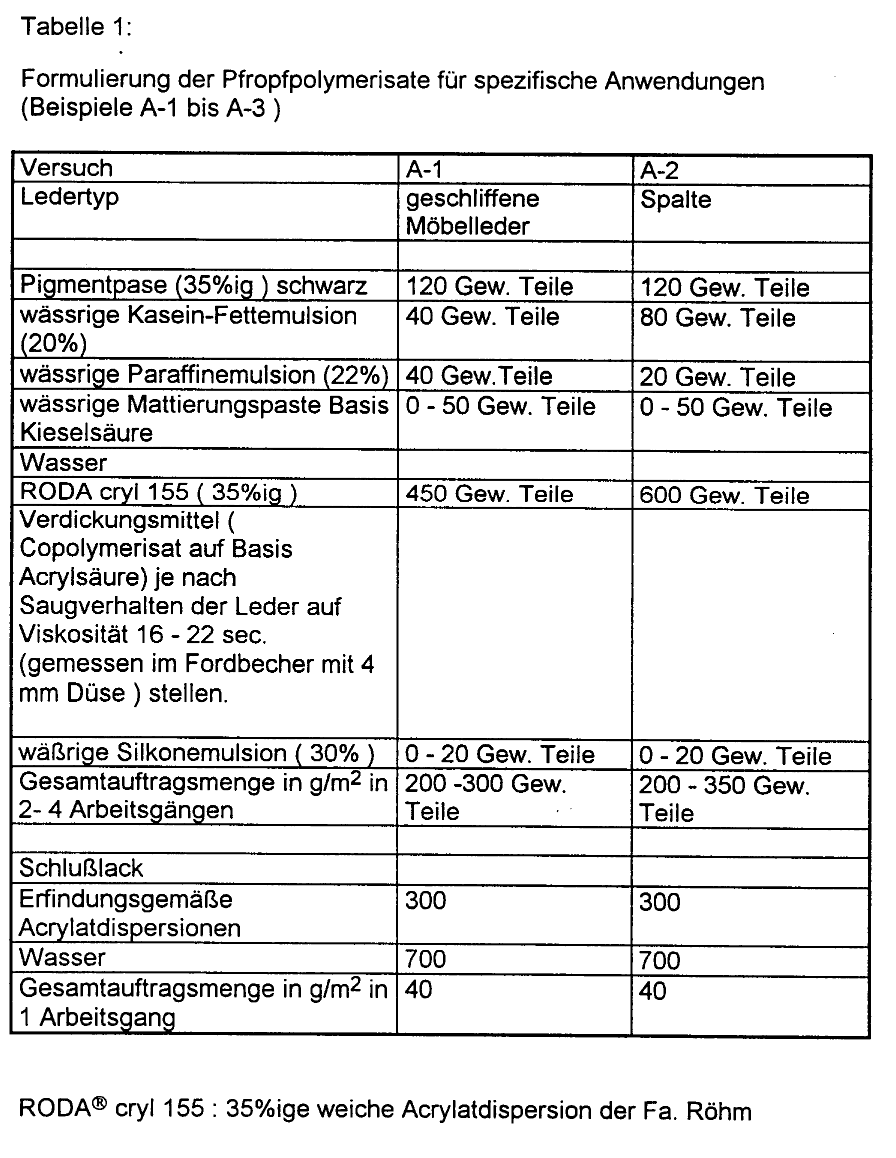

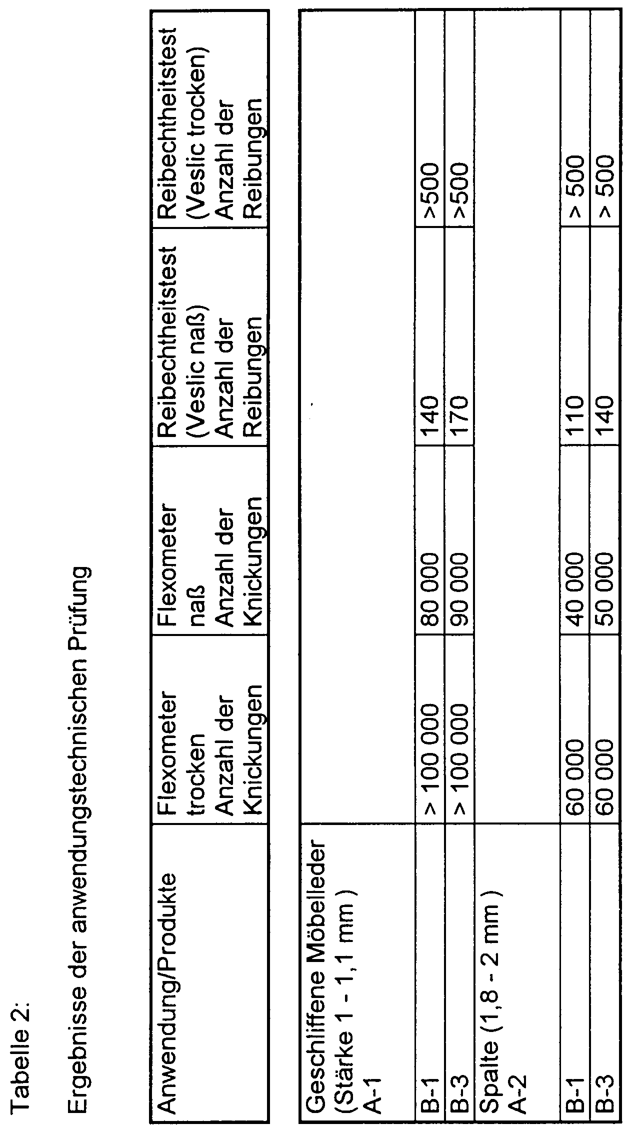

## Patentansprüche

1. Pfropfpolymerisate auf Basis von Poly(meth)acrylsäureestern zur Beschichtung von Flächengebilden,
dadurch gekennzeichnet,
daß die Pfropfpolymerisate PF aufgebaut sind aus einem Basispolymerisat BP, das zu 60 - 100 Gew.-% gebildet wird aus Monomeren der Formel I 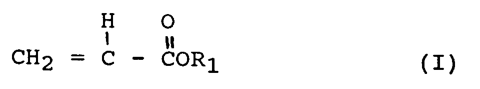 worin
R₁ für einen Alkylrest mit 2 bis 24 Kohlenstoffatomen steht, auf das
Pfropfmonomeren MPF ausgewählt aus der Gruppe bestehend aus
a) Methylmethacrylat
b) Monomeren der Formel II 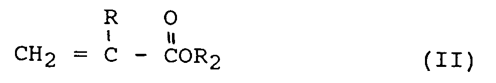 worin
R für Wasserstoff oder Methyl und R₂ für einen Alkylrest mit 1 oder mit 8 bis 14 Kohlenstoffatomen steht, mit der Maßgabe, daß R und R₂ nicht gleichzeitig für Methyl stehen, und
c) Monomeren der Formel III 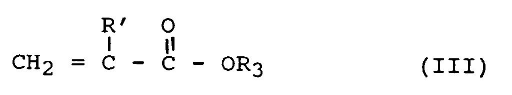 worin
R' für Wasserstoff oder Methyl und R₃ für einen mindestens einfach bis perfluorierten Alkylrest mit 1 bis 6 Kohlenstoffatomen steht,
pfropfend aufpolymerisiert sind, mit der Maßgabe, daß der Methylmethacrylatanteil an den Pfropfmonomeren MPF größer 80 Gew.-% sein soll, sofern der Anteil der Monomeren der Formel III Null ist.

2. Pfropfpolymerisate PF nach Anspruch 1, dadurch gekennzeichnet, daß R₂ in Formel II einen C₂-C₈-Alkylrest bedeutet.

3. Pfropfpolymerisate PF nach Anspruch 1, dadurch gekennzeichnet, daß R₁ in Formel (I) einen C₈-C₂₄-Alkylrest bedeutet.

4. Pfropfpolymerisate PF gemäß den Ansprüchen 1-3, dadurch gekennzeichnet, daß die am Aufbau des Polymeren BP beteiligten Monomeren zu den Pfropfmonomeren MPF im Gewichtsverhältnis 10 : 90 bis 90 : 10 stehen.

5. Pfropfpolymerisate PF gemäß den Ansprüchen 1 - 4 in Form einer wäßrigen Dispersion mit einem Polymergehalt zwischen 20 und 70 Gew.-%.

6. Verfahren zur Behandlung von Leder, dadurch gekennzeichnet, daß man auf die Lederoberfläche Pfropfpolymerisate PF gemäß den Ansprüchen 1 bis 5 gleichmäßig aufbringt.

7. Verfahren gemaß Anspruch 6, dadurch gekennzeichnet, daß die Pfropfprodukte PF in wäßriger Dispersion vorliegen.

8. Verfahren gemäß den Patentansprüchen 6 und 7, dadurch gekennzeichnet, daß die Dispersionen noch gleichzeitig an sich bekannte Verdicker enthalten.

9. Verfahren gemäß den Patentansprüchen 6 bis 8, dadurch gekennzeichnet, daß die Dispersionen noch zusätzlich an sich bekannte Vernetzungsmittel enthalten.

10. Verfahren gemäß den Patentansprüchen 6 bis 9, dadurch gekennzeichnet, daß die Dispersionen noch zusätzlich an sich bekannte Hilfsmittel zur Regulierung der Ledereigenschaften enthalten.

11. Verfahren gemäß den Patentansprüchen 1 bis 10, dadurch gekennzeichnet, daß das fertig beschichtete Leder einem Temperprozeß zwischen 60 und 120 Grad C unterzogen wird.

12. Verfahren gemäß den Ansprüchen 1 bis 11, dadurch gekennzeichnet, daß der Temperprozeß durch Einwirkung von Infrarot- bzw. Mikrowellenstrehlung vollzogen wird.

13. Leder, ausgerüstet mit einer Deckschicht aus einem filmbildenden Pfropfprodukt PF gemäß den Patentansprüchen 1 bis 5.
